Europäisches Patentamt

(19) European Patent Office

Office européen des brevets

(11) Numéro de publication : **0 127 513**
**B1**

(12) **FASCICULE DE BREVET EUROPÉEN**

(45) Date de publication du fascicule du brevet :
08.07.87

(51) Int. Cl.⁴ : **C 03 B   5/235**

(21) Numéro de dépôt : **84400978.7**

(22) Date de dépôt : **15.05.84**

(54) Procédé et installation d'élaboration de verre.

(30) Priorité : **20.05.83 FR 8308362**

(43) Date de publication de la demande :
**05.12.84 Bulletin 84/49**

(45) Mention de la délivrance du brevet :
**08.07.87 Bulletin 87/28**

(84) Etats contractants désignés :
**AT BE CH DE FR GB IT LI LU NL SE**

(56) Documents cités :
**FR-A-   368 208**
**FR-A- 2 010 199**
**FR-A- 2 038 247**

(73) Titulaire : **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur : **Desprez, Marc
7, Rue Paul Napoléon Roinard
F-92400 Courbevoie (FR)**

(74) Mandataire : **Leclercq, Maurice et al
L'AIR LIQUIDE SOCIETE ANONYME POUR L'ETUDE
ET L'EXPLOITATION DES PROCEDES GEORGES
CLAUDE 75, Quai d'Orsay
F-75321 Paris Cedex 07 (FR)**

Jouve, 18, rue St-Denis, 75001 Paris, France

**0 127 513**

## Description

La présente invention a pour objet un procédé d'élaboration de verre.

Comme on le sait, l'élaboration de verre consiste à chauffer et fondre dans un four un mélange de produits minéraux en poudre dit « composition verrière », tel que du sable en mélange avec des produits naturels contenant entre autres des sels alcalins et alcalino-terreux. De façon plus précise, on introduit dans le four la composition verrière qui forme une couche d'épaisseur irrégulière dite « tapis ». Ce tapis se sépare progressivement en « mottes » qui flottent à la surface du bain de verre fondu précédemment obtenu et qui sont progressivement « digérées » par celui-ci, et on évacue en continu le verre fondu dudit four. Pour que le verre obtenu soit de bonne qualité, il est nécessaire qu'il y ait bonne homogénéisation en température et en composition chimique dans le bain de verre fondu, c'est-à-dire, d'une part qu'il y ait un chauffage régulier dudit bain et, d'autre part que les mottes nouvellement formées fondent le plus rapidement possible. C'est pourquoi, un certain nombre de procédés mis en œuvre actuellement consistent à chauffer le bain de verre fondu à l'aide de brûleurs aéro-combustibles répartis régulièrement le long d'une paroi latérale du four et à chauffer de façon plus intense la zone voisine de l'endroit où l'on enfourne la composition verrière à l'aide d'un brûleur oxy-combustible.

Parmi les procédés de ce type connus jusqu'à présent, on peut citer le procédé décrit dans le brevet français n° 2 010 199. Ce brevet préconise l'utilisation de brûleurs oxy-combustibles refroidis à l'eau, placés en tête de four et produisant une flamme oxydante se développant parallèlement à la surface du bain de verre fondu et selon l'axe longitudinal du four.

Si ce procédé permet d'obtenir des verres de qualité satisfaisante, il présente toutefois des inconvénients liés notamment au mode de refroidissement des brûleurs oxy-combustibles utilisés. En effet, le fait que les brûleurs oxy-combustibles décrits ci-dessus soient refroidis par un liquide, à savoir l'eau, pose les problèmes suivants :

il y a création d'un point froid dans la partie de la surface du bain de verre qui est en regard du brûleur oxy-combustible, ce qui a pour conséquence, d'une part une perte en rendement thermique (5 à 10 kW, d'autre part des perturbations dans les courants de circulation du verre provoquées par la modification, à cet endroit là, des gradients de température et de la viscosité du verre ;

il y a risque de corrosion du métal constituant le brûleur ; en effet, le chemisage refroidi par l'eau du brûleur est à une température inférieure à 100 °C : il y a donc condensation sur la surface du brûleur des vapeurs des produits présents dans la composition verrière ; or cette composition verrière peut contenir des produits tels que du spath-fluor, de l'anhydride borique, des sels de soude, qui conduiront respectivement, lors de leur condensation, à la formation d'acide fluorhydrique, d'acide borique, de soude, composés qui attaquent le métal constituant le chemisage du brûleur ;

il y a complication de l'installation de contrôle des fluides, car on doit vérifier à chaque instant qu'il y a bien en permanence circulation d'eau dans le chemisage.

De plus, l'élaboration du verre pose des problèmes spécifiques à ce matériau. En effet, du fait que le matériau à fondre est constitué de poudre formant un tapis qui flotte sur un bain de verre plus ou moins visqueux, il est nécessaire que la flamme oxy-combustible n'ait pas un effet trop dynamique sur ledit tapis ; en effet, cela risquerait de provoquer un envol des produits pulvérulents le constituant entraînant une perte en matière première sous forme de particules solides et une abrasion mécanique des superstructures du four par les courants de fumées chargées de ces particules solides. D'autre part, il est préférable que la flamme oxy-combustible ne soit pas trop dure car elle provoquerait la formation de vagues à la surface du bain de verre, à l'endroit où elle touche celui-ci, ni qu'elle soit trop pincée car elle n'intéresserait alors qu'une partie trop limitée de la surface du bain.

C'est une flamme à la fois trop dure et trop dynamique, à géométrie non contrôlable que propose le FR-A-368 208. Le brûleur décrit dans ce brevet comporte en effet un jet d'air auxiliaire qui vient couper radialement le mélange air-combustible de manière à pulvériser celui-ci et participer à la combustion.

L'invention a pour objet un procédé qui pallie les inconvénients rappelés ci-dessus et résout les problèmes spécifiques à la fusion du verre.

Le procédé objet de l'invention, consiste à introduire à une extrémité d'un four un mélange de matières minérales en poudre, formant un tapis qui se sépare progressivement en mottes flottant à la surface du bain de verre fondu déjà formé, à chauffer ledit mélange et à évacuer en continu à l'autre extrémité dudit four le verre fondu ainsi obtenu, le chauffage dudit mélange s'effectuant à la fois à l'aide d'au moins une flamme d'un combustible et d'air et d'au moins une flamme d'un combustible et d'oxygène introduites dans ledit four. Il se caractérise en ce que l'on injecte dans le four un courant de gaz auxiliaire concentrique à et entourant ladite flamme d'un combustible et d'oxygène, orienté axialement par rapport à celle-ci.

Selon une caractéristique du procédé de l'invention, le gaz entourant la flamme oxy-combustible est de l'air, et de préférence de l'air comprimé. Ce peut être également un autre gaz tel que l'azote.

Selon une autre caractéristique de l'invention, on dirige la flamme d'un combustible et d'oxygène entourée du courant de gaz auxiliaire sur les mottes flottant sur le bain de verre.

L'invention a également pour objet l'installation de mise en œuvre du procédé considéré.

L'installation conforme à l'invention comporte un four muni à une extrémité de moyens d'introduc-

2

0 127 513

tion d'un mélange de matières minérales en poudre, de moyens de chauffage dudit mélange, et à l'autre extrémité de moyens d'évacuation du verre fondu obtenu, lesdits moyens de chauffage étant constitués par au moins un brûleur aéro-combustible et au moins un brûleur oxy-combustible. Selon l'invention, le brûleur oxy-combustible est entouré, au moins sur une partie de sa longueur, d'une gaine concentrique audit brûleur, dans laquelle circule un gaz auxiliaire, orienté axialement par rapport à la flamme.

Les caractéristiques et avantages de l'invention apparaîtront dans la description suivante, donnée à titre non limitatif, en référence aux dessins annexés sur lesquels :

la figure 1 est une vue schématique partielle, en coupe longitudinale, d'une installation d'élaboration de verre selon l'invention ;

la figure 2 est une vue schématique partielle de dessus de l'installation de la figure 1 ;

la figure 3 est une vue schématique, en coupe longitudinale, d'un mode de réalisation d'un brûleur oxy-combustible utilisé dans une installation conforme à l'invention.

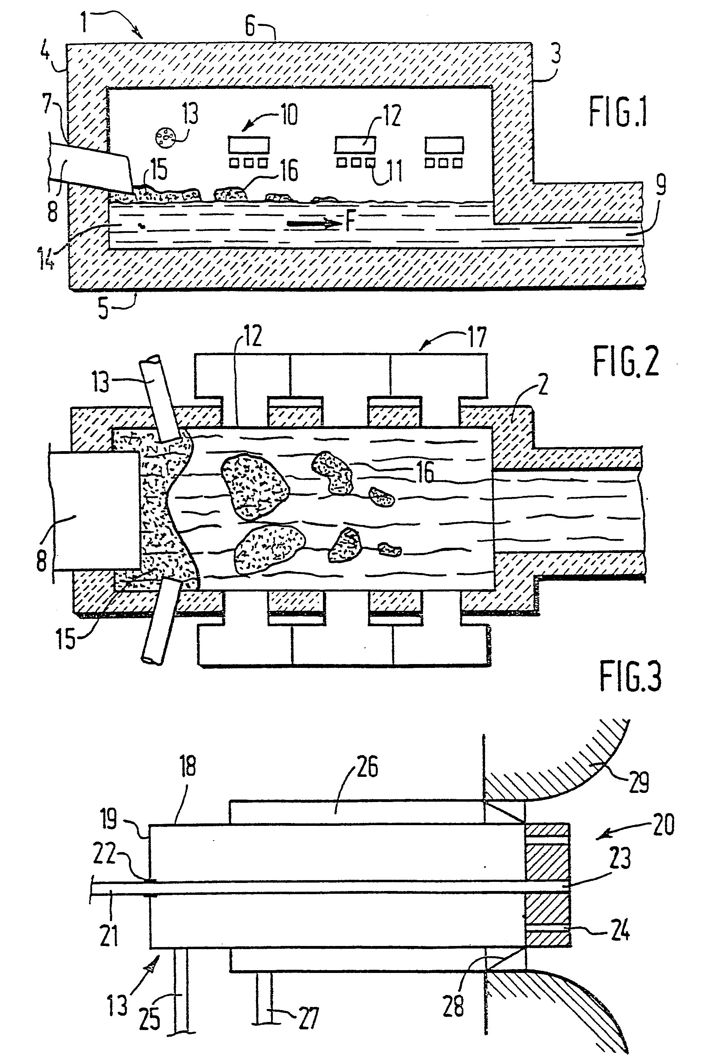

En se référant aux figures 1 et 2, une installation d'élaboration de verre comprend un four de fusion 1 qui comporte deux parois latérales 2, une paroi avant 3 et une paroi arrière 4, une sole 5 et une voûte 6. Un orifice 7 est ménagé dans la paroi arrière 4 pour permettre le passage d'un distributeur 8 de charges minérales, dénommé enfourneuse. La paroi avant 3 comporte à sa partie inférieure un orifice 9 d'évacuation du verre fondu. Des brûleurs aéro-combustibles 10 (comportant des injecteurs de combustible 11 et une arrivée d'air chaud 12) sont montés dans les parois latérales 2 du four 1 et régulièrement répartis en une rangée le long de ces parois. Dans chacune des parois latérales 2 est monté un brûleur oxy-combustible 13.

La partie inférieure du four 1 contient un bain de verre fondu 14 provenant de la fusion du mélange de matières minérales introduites et chauffées dans le four. Ce mélange forme d'abord un tapis 15 qui se sépare progressivement en mottes 16 qui flottent un certain temps sur la surface du bain 14 avant de fondre. Le verre fondu, qui s'écoule dans le sens de la flèche F, est évacué en continu par l'orifice 9. Chaque brûleur oxy-combustible 13 est incliné par rapport à la surface du bain 14 et par rapport à la paroi 2 de façon telle que la flamme qu'il produit soit dirigée sur les mottes 16. L'angle du brûleur 13 par rapport à la surface du bain de verre est d'environ 0° à 30°, et de préférence de 10° à 20°.

Sur chacune des parois latérales 2 est monté un échangeur de chaleur 17 entre l'air d'alimentation des brûleurs 10 et les fumées évacuées du four ; cet échangeur de chaleur 17 est du type classique à inversion.

En se référant à la figure 3, chacun des brûleurs oxy-combustibles 13 comporte un corps cylindrique creux 18 muni d'une plaque d'extrémité 19 et d'un nez 20 ; le corps 18 du brûleur est traversé par un canal central 21 d'alimentation en combustible (par exemple un hydrocarbure gazeux tel que du méthane ou liquide tel que du fuel) qui passe à travers la plaque d'extrémité 19 par un orifice 22 et à travers le nez 20 du brûleur par un orifice 23. Le nez 20 du brûleur est constitué par une plaque circulaire percée de l'orifice central 23 pour le passage du combustible et d'orifices 24 régulièrement répartis autour de l'orifice central 23. Le corps 18 est alimenté en oxygène par le conduit 25, oxygène qui ressort par les orifices 24.

Une gaine 26, concentrique au corps du brûleur 18, entoure ce dernier sur une partie de sa longueur. Cette gaine 26 est alimentée en air comprimé par le conduit 27. La gaine 26 est munie d'ailettes de mise en rotation 28 de l'air circulant dans ladite gaine. Cette gaine 28 est montée coulissante sur le corps 18 du brûleur ; on peut donc régler sa distance par rapport au nez 20 du brûleur.

Le corps 18 du brûleur muni de la gaine 26 est introduit dans le four 1 par enfoncement partiel dans un ouvreau réfractaire 29.

Le fonctionnement de l'installation représenté aux figures 1 à 3 est le suivant.

On introduit, à l'aide de l'enfourneuse 8, le mélange de matières minérales pulvérulentes dans le four 1 et, simultanément, on chauffe le four à l'aide des brûleurs aéro-combustibles 10 et des brûleurs oxy-combustibles 13. Il se forme un bain de verre fondu 14 sur lequel flottent les mottes 16 dernièrement formées. On dirige la flamme provenant de chacun des brûleurs oxy-combustibles 13 sur ces mottes en inclinant ces derniers en conséquence. Ainsi, les mottes nouvellement formées 16 fondent plus rapidement et le bain de verre fondu 14 s'affine progressivement au fur et à mesure du chauffage ; on évacue le verre fondu ainsi obtenu par l'orifice 9.

Pour ne pas avoir une flamme trop dynamique, on injecte l'oxygène dans chaque brûleur 13 à une vitesse nettement inférieure à la vitesse du son, soit une vitesse d'environ 30 m/s à environ 150 m/s et de préférence une vitesse de 60 m/s à 120 m/s ; dans le cas où le combustible est un gaz, on l'injecte à une vitesse sensiblement égale à celle de l'oxygène de façon à ce qu'il n'y ait pas mélange trop rapide des deux gaz dès la sortie du brûleur, ce qui permet d'obtenir une flamme longue et volumineuse qui couvre bien la surface du bain 14.

A l'aide du gaz auxiliaire circulant dans la gaine 26 de chaque brûleur 13 à un débit de 10 à 40 m³/h, on adapte la géométrie de la flamme produite par le brûleur en fonction des dimensions du four ; c'est-à-dire que si l'on désire avoir une flamme plus pincée, on injecte le courant de gaz auxiliaire coaxialement à la flamme de combustible et d'oxygène et on joue sur l'impulsion de ce courant de gaz auxiliaire ; par contre, si l'on désire obtenir une flamme plus volumineuse, on met le courant de gaz auxiliaire en rotation dans la gaine 26 grâce aux ailettes 28.

En utilisant, conformément à l'invention, un courant de gaz auxiliaire comme agent de refroidisse-

3

**0 127 513**

ment de chaque brûleur 13, on peut maintenir le corps du brûleur à une température de 300 °C à 500 °C tandis que la température du nez du brûleur (fonction essentiellement du débit d'oxygène) varie de 400 °C à 800 °C, pour une température du four de 1 400 °C. Avec ces températures du corps du brûleur, les condensations de vapeur sont limitées et il n'y a donc pas problèmes de corrosion. A titre d'illustration de cet avantage, on donne dans le tableau ci-dessous les températures atteintes par le nez et par le corps du brûleur refroidi à l'air, compte tenu de l'enfoncement du brûleur dans l'ouvreau et du débit de l'air de refroidissement.

| Enfoncement du brûleur dans l'ouvreau (cm) | Débit de l'air (m³.h⁻¹) | Température du nez (°C) | Température du corps (°C) |
|---|---|---|---|
| 8 | 5 | 676 | 465 |
| 12 | 15 | 675 | 467 |
| 16 | 25 | 739 | 464 |
| 20 | 35 | 772 | 472 |

De plus, le fait que l'on utilise un courant concentrique de gaz auxiliaire autour de la flamme oxy-combustible permet de protéger l'ouvreau réfractaire 29 dans lequel est placé chaque brûleur 13 ; en effet ce gaz auxiliaire crée un tube de courant entourant la flamme oxy-combustible et l'empêche de toucher l'ouvreau. Par ailleurs, l'utilisation de ce courant concentrique de gaz auxiliaire permet de réaliser l'étanchéité complète de chaque brûleur 13 par rapport au four ; en effet, la gaine 26 de circulation du gaz auxiliaire peut toucher l'ouvreau car, comme elle est à une température assez élevée, il n'y a pas de différence de température trop importante entre cette dernière et l'ouvreau, et donc pas de risque de détérioration de celui-ci. Ainsi, on évite les entrées d'air froid parasites qui nuisent au rendement thermique de la flamme.

**Revendications**

1. Procédé d'élaboration de verre dans lequel on introduit, à une extrémité d'un four, un mélange de matières minérale en poudre formant un tapis qui se sépare progressivement en mottes flottant à la surface du bain de verre fondu déjà formé, on chauffe ledit mélange et on évacue en continu, à l'autre extrémité du four, le verre fondu ainsi obtenu, le chauffage du mélange s'effectuant à l'aide d'au moins une flamme d'un combustible et d'oxygène pour chauffer, de façon plus intense que le reste du four, la zone voisine de l'endroit où l'on enfourne le mélange de matières minérales en poudre et éventuellement à l'aide d'au moins une flamme d'un combustible et d'air le long de la paroi latérale du four, caractérisé en ce que l'on injecte dans le four un courant de gaz auxiliaire entourant la flamme du combustible et de l'oxygène, orienté axialement par rapport à celle-ci, et on dirige cette flamme, ainsi entourée du courant de gaz auxiliaire, sur les mottes flottant sur le bain de verre fondu.

2. Procédé suivant la revendication 1 caractérisé en ce que le gaz auxiliaire est constitué par de l'air.

3. Procédé suivant la revendication 2 caractérisé en ce que le gaz auxiliaire est constitué par de l'air comprimé.

4. Procédé suivant l'une quelconque des revendications précédentes caractérisé en ce qu'on injecte le courant de gaz auxiliaire coaxialement par rapport à la flamme d'un combustible et d'oxygène.

5. Procédé suivant l'une quelconque des revendications 1 à 3 caractérisé en ce qu'on injecte le courant de gaz auxiliaire en le mettant en rotation autour de la flamme d'un combustible et d'oxygène.

6. Procédé suivant l'une quelconque des revendications précédentes caractérisé en ce qu'on injecte l'oxygène participant à la flamme d'un combustible et d'oxygène à une vitesse d'environ 30 m/s à 150 m/s.

7. Procédé suivant la revendication 6 caractérisé en ce qu'on injecte l'oxygène à une vitesse d'environ 60 m/s à environ 120 m/s.

8. Procédé suivant l'une quelconque des revendications précédentes caractérisé en ce qu'on injecte le courant de gaz auxiliaire avec un débit de 10 à 40 m³/h.

9. Installation pour la mise en œuvre du procédé suivant l'une quelconque des revendications 1 à 9, comportant un four, des moyens d'introduction de matières minérales en poudre à une extrémité du four, des moyens de chauffage de ces matières minérales durant leur parcours dans le four, des moyens d'évacuation du verre fondu obtenu à l'autre extrémité du four, les moyens de chauffage étant constitués

4

d'au moins un brûleur oxy-combustible et éventuellement d'au moins un brûleur aéro-combustible, caractérisée en ce que le brûleur oxy-combustible (13) est dirigé vers les mottes (16) flottant sur le bain de verre fondu (14) et il est entouré, au moins sur une partie de sa longueur, d'une gaine coaxiale (26) alimentée en gaz auxiliaire et injectant un courant de gaz auxiliaire autour de la flamme du brûleur (13) et orienté axialement par rapport à celle-ci.

10. Installation suivant la revendication 9 caractérisée en ce que le brûleur oxy-combustible (13) est monté dans une paroi latérale du four.

11. Installation suivant l'une quelconque des revendications caractérisée en ce que le brûleur oxy-combustible (13) est incliné par rapport à l'horizontale d'un angle allant de 0° à 30° et de préférence de 8° à 20°.

12. Installation suivant l'une quelconque des revendications caractérisée en ce que la gaine (26) de circulation du gaz auxiliaire est montée coulissante le long du brûleur (13).

13. Installation suivant l'une quelconque des revendications caractérisée en ce que la gaine (26) de circulation du gaz auxiliaire est munie d'ailettes (28) de mise en rotation du gaz auxiliaire.

## Claims

1. Process for making glass by introducing at an extremity of a furnace a pulverulent mixture of mineral materials forming a carpet which separates progressively into lumps floating on the surface of the bath of molten glass already formed, heating said mixture and withdrawing continuously at the other extremity of the surface the molten glass so obtained, the heating of the mixture being effected by means of at least one flame of a combustible and oxygen to heat the zone in vicinity of the place where the pulverulent mixture of the mineral material is introduced into the furnace more intensively than the remainder of the furnace, and optionally by means of at least one flame of a combustible and air along the side wall of the furnace, characterized in that one injects in the furnace a stream of auxiliary gas surrounding the flame of the combustible and the oxygen, oriented axially in relation to it, and one directs this flame so surrounded by the stream of auxiliary gas to the lumps floating on the bath of molten glass.

2. Process according to claim 1, characterized in that the auxiliary gas consists of air.

3. Process according to claim 2 characterized in that the auxiliary gas consists of compressed air.

4. Process according to one of the preceeding claims, characterized in that one injects the stream of auxiliary gas coaxially in relation to the flame of a combustible and oxygen.

5. Process according to one of the claims 1 to 3, characterized in that one injects the stream of auxiliary gas having rotated it around the flame of a combustible and oxygen.

6. Process according to one of the preceeding claims, characterized in that one injects the oxygen participating in the flame of a combustible and oxygen with a velocity of about 30 m/s to 150 m/s.

7. Process according to claim 6, characterized in that one injects the oxygen with a velocity of about 60 m/s to about 120 m/s.

8. Process according to one of the preceeding claims, characterized in that one injects the stream of auxiliary gas with a rate of 10 to 40 $m^3/h$.

9. Apparatus for carrying out the process according to one of the claims 1 to 9, comprising a furnace, means for introduction of pulverulent mineral materials at an extremity of the furnace, means of heating these mineral materials during their passage through the furnace, means for withdrawing obtained molten glass at the other extremity of the furnace, the means of heating consisting of at least one oxygen-combustible burner and possibly at least one air-combustible burner, characterized in that the oxygen-combustible burner (13) is directed to the lumps (16) floating on the bath of molten glass (14) and is surrounded at least on a portion of its length by a coaxial jacket (26) feeded by an auxiliary gas, injecting stream of auxiliary gas around the flame of the burner (13) oriented axially in relation to it.

10. Apparatus according to claim 9, characterized in that the oxygen-combustible burner (13) is mounted in the side wall of the furnace.

11. Apparatus according to one of the preceeding claims, characterized in that the oxygen-combustible burner (13) is inclined in relation to the horizontal with an angle of 0° to 30°, preferably of 8° to 20°.

12. Apparatus according to one of the preceeding claims, characterized in that the jacket (26) of circulation of auxiliary gas is mounted slidably along the burner (13).

13. Apparatus according to one of the preceeding claims, characterized in that the jacket (26) for the circulation of the auxiliary gas is provided with wings (28) for the rotation of the auxiliary gas.

## Patentansprüche

1. Verfahren zur Herstellung von Glas, bei dem man an einem Ende eines Ofens ein Gemisch von mineralischen Materialien in Pulverform einführt, das einen Teppich bildet, der sich zunehmend in Klumpen trennt, die auf der Oberfläche des bereits gebildeten Bades von geschmolzenem Glas schwimmen, das Gemisch erwärmt und kontinuierlich am anderen Ende des Ofens das so erhaltene

**0 127 513**

geschmolzene Glas abnimmt, wobei das Erhitzen des Gemisches mit Hilfe wenigstens einer Flamme eines Brennstoffes und von Sauerstoff, um die Zone in Nachbarschaft zu der Stelle, wo man das Gemisch der mineralischen Materialien in Pulverform in den Ofen einführt, stärker als den Rest des Ofens zu erwärmen, und gegebenenfalls mit Hilfe einer Flamme eines Brennstoffes und von Luft entlang der Seitenwand des Ofens erfolgt, dadurch gekennzeichnet, daß man in den Ofen einen Hilfsgasstrom einspritzt, der die Flamme des Brennstoffes und des Sauerstoffes umgibt und axial bezüglich derselben ausgerichtet ist und daß man diese so von dem Hilfsgasstrom umgebene Flamme auf die Klumpen, die auf dem Bad von geschmolzenem Glas schwimmen, richtet.

2. Verfahren nach Anspruch 1, dadurch gekennzeichnet, daß das Hilfsgas aus Luft besteht.

3. Verfahren nach Anspruch 2, dadurch gekennzeichnet, daß das Hilfsgas aus Druckluft besteht.

4. Verfahren nach einem der vorausgehenden Ansprüche, dadurch gekennzeichnet, daß man den Hilfsgasstrom koaxial bezüglich der Flamme eines Brennstoffes und von Sauerstoff einspritzt.

5. Verfahren nach einem der Ansprüche 1 bis 3, dadurch gekennzeichnet, daß man den Hilfsgasstrom einspritzt, indem man ihn um die Flamme eines Brennstoffes und von Sauerstoff rotieren läßt.

6. Verfahren nach einem der vorausgehenden Ansprüche, dadurch gekennzeichnet, daß man den an der Flamme eines Brennstoffes und von Sauerstoff teilhabenden Sauerstoff mit einer Geschwindigkeit von etwa 30 m/s bis 150 m/s einspritzt.

7. Verfahren nach Anspruch 6, dadurch gekennzeichnet, daß man den Sauerstoff mit einer Geschwindigkeit von etwa 60 m/s bis etwa 120 m/s einspritzt.

8. Verfahren nach einem der vorausgehenden Ansprüche, dadurch gekennzeichnet, daß man den Hilfsgasstrom mit einem Durchsatz von 10 bis 40 m³/h einspritzt.

9. Vorrichtung zur Durchführung des Verfahrens nach einem der Ansprüche 1 bis 9 mit einem Ofen, Einrichtungen zur Einführung mineralischer Materialien in Pulverform an einem Ende des Ofens, Einrichtungen zum Erhitzen dieser mineralischen Materialien während ihres Durchgangs durch den Ofen und Einrichtungen zur Entnahme von erhaltenem geschmolzenem Glas am anderen Ende des Ofens, wobei die Einrichtungen zum Erwärmen aus wenigstens einem Sauerstoff-Brennstoff-Brenner und gegebenenfalls wenigstens einem Luft-Brennstoff-Brenner bestehen, dadurch gekennzeichnet, daß der Sauerstoff-Brennstoff-Brenner (13) auf die Klumpen (16), die auf dem Bad von geschmolzenem Glas (14) schwimmen, gerichtet ist und wenigstens über einen Teil auf seiner Länge von einem koaxialen Mantel (26) umgeben ist, der mit einem Hilfsgas gespeist ist, wobei ein Hilfsgasstrom um die Flamme des Brenners (13) herum eingespritzt wird und bezüglich derselben axial ausgerichtet ist.

10. Vorrichtung nach Anspruch 9, dadurch gekennzeichnet, daß der Sauerstoff-Brennstoff-Brenner (13) in einer Seitenwand des Ofens befestigt ist.

11. Vorrichtung nach einem der vorausgehenden Ansprüche, dadurch gekennzeichnet, daß der Sauerstoff-Brennstoff-Brenner (13) gegenüber der Horizontalen in einem Winkel von 0° bis 30° und vorzugsweise von 8° bis 20° geneigt ist.

12. Vorrichtung nach einem der vorausgehenden Ansprüche, dadurch gekennzeichnet, daß der Mantel (26) für die Hilfsgaszirkulation entlang dem Brenner (13) verschiebbar befestigt ist.

13. Vorrichtung nach einem der vorausgehenden Ansprüche, dadurch gekennzeichnet, daß der Mantel (26) für die Hilfsgaszirkulation mit Flügeln (28) zur Rotation des Hilfsgases versehen ist.

6

FIG.1

FIG.2

FIG.3

1